(19) Europäisches Patentamt
European Patent Office
Office européen des brevets

(11)     **EP 3 605 286 B1**

(12)                    **EUROPEAN PATENT SPECIFICATION**

(45) Date of publication and mention
of the grant of the patent:
**17.02.2021   Bulletin 2021/07**

(51) Int Cl.:
*G06F 3/0362* (2013.01)          *G04G 21/00* (2010.01)
*G06F 3/0482* (2013.01)          *G06F 3/0485* (2013.01)
*G06F 1/16* (2006.01)            *G06F 3/01* (2006.01)

(21) Application number: **19199004.3**

(22) Date of filing: **03.09.2014**

(54) **USER INTERFACE FOR MANIPULATING USER INTERFACE OBJECTS**

BENUTZERSCHNITTSTELLE ZUR MANIPULATION VON
BENUTZERSCHNITTSTELLENOBJEKTEN

INTERFACE UTILISATEUR POUR LA MANIPULATION D'OBJETS D'INTERFACE UTILISATEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.09.2013   US 201361959851 P
03.09.2013   US 201361873356 P
03.09.2013   US 201361873359 P
03.09.2013   US 201361873360 P**

(43) Date of publication of application:
**05.02.2020   Bulletin 2020/06**

(60) Divisional application:
**20217518.8**

(62) Document number(s) of the earlier application(s) in
accordance with Art. 76 EPC:
**14772001.5 / 3 047 359**

(73) Proprietor: **Apple Inc.**
**Cupertino CA 95014 (US)**

(72) Inventors:
• **ZAMBETTI, Nicholas**
**Largo, FL 33774-5036 (US)**
• **CHAUDHRI, Imran**
**Cupertino, CA California 95014 (US)**
• **DASCOLA, Jonathan, R.**
**Cupertino, CA California 95014 (US)**
• **DYE, Alan, C.**
**Cupertino, CA California 95014 (US)**
• **FOSS, Christopher, Patrick**
**Cupertino, CA California 95014 (US)**
• **GUZMAN, Aurelio**
**Cupertino, CA California 95014 (US)**
• **KERR, Duncan, Robert**
**Cupertino, CA California 95014 (US)**
• **LEMAY, Stephen, O.**
**Cupertino, CA California 95014 (US)**
• **MARIC, Natalia**
**Cupertino, CA California 95014 (US)**
• **WILSON, Christopher**
**Cupertino, CA California 95014 (US)**
• **WILSON, Eric, Lance**
**Cupertino, CA California 95014 (US)**
• **YANG, Lawrence, Y.**
**Cupertino, CA California 95014 (US)**
• **BUTCHER, Gary, Ian**
**Cupertino, CA California 95014 (US)**
• **DAVYDOV, Anton, M.**
**Cupertino, CA California 95014 (US)**
• **EDWARDS, Dylan, Ross**
**Cupertino, CA California 95014 (US)**
• **IVE, Jonathan, P.**
**Cupertino, CA California 95014 (US)**
• **KING, Nicholas, V.**
**Cupertino, CA California 95014 (US)**
• **PRESTON, Daniel, Trent**
**Cupertino, CA California 95014 (US)**
• **KENNEDY, Zachery**
**San Jose, CA California 95112 (US)**
• **KARUNAMUNI, Chanaka, G.**
**Cupertino, CA California 95014 (US)**

(74) Representative: **Zacco Denmark A/S**
**Arne Jacobsens Allé 15**
**2300 Copenhagen S (DK)**

(56) References cited:
**EP-A1- 2 551 784          WO-A2-2006/037545
US-A1- 2003 076 301      US-A1- 2004 252 119**

US-A1- 2009 098 912    US-A1- 2011 316 888         US-B1- 6 661 438
US-A1- 2012 159 380    US-A1- 2013 097 566

**Description**

**FIELD**

The disclosed embodiments relate generally to user interfaces of electronic devices, including but not limited to user interfaces for electronic watches.

**BACKGROUND**

Advanced personal electronic devices can have small form factors. Exemplary personal electronic devices include but are not limited to tablets and smart phones. Uses of such personal electronic devices involve manipulation of user interface objects on display screens which also have small form factors that complement the design of the personal electronic devices.

Exemplary manipulations that users can perform on personal electronic devices include navigating a hierarchy, selecting a user interface object, adjusting the position, size, and zoom of user interface objects, or otherwise manipulating user interfaces. Exemplary user interface objects include digital images, video, text, icons, control elements such as buttons, and other graphics.

US 2013/097566-A1 describes display items on such an electronic device by displaying a first set of items, receiving a first gesture on a touch-sensitive panel of the electronic device, and displaying a second set of items, the second set of items being a subset of the first set of items

US 6 661 438-B1 describes that a display apparatus further has a display unit for displaying, on a menu screen, at least one of first icon information and second icon information. The display apparatus further has a control unit for selecting the first icon information or the second icon information based on the number of pieces of display data newly registered in the first storage unit and for controlling the displaying unit so that the selected icon information is displayed on the menu screen.

WO 2006/037545-A2 describes a mobile communication terminal having a display with an application area thereon. The application area is partitioned into at least two unequally sized sections. The size of the application area allocated to the respective application area sections is dynamically controlled in response to user input.

EP 2 551 784-A1 describes a medical system, comprising a display and wherein in response to the reception of triggering information, a subset of data is selected from a displayed or non-displayed dataset according to a data priority scheme and wherein the displayed dataset is replaced by the display of the selected subset of data. The triggering information is provided by the user of provided by one or more sensors.

US 2012/159380-A1 describes an electronic device that includes a touch-sensitive display and one or more programs. The one or more programs include instructions for displaying a first application view that corresponds to a first application in a plurality of concurrently open applications. The one or more programs include instructions for detecting a first input, and in response, concurrently displaying a group of open application icons that correspond to at least some of the plurality of concurrently open applications with at least a portion of the first application view. The open application icons are displayed in accordance with a predetermined sequence of the open applications.

US 2011/316888-A1 describes user interfaces for mobile devices which combine input from motion sensors and other input controls. In one aspect, a handheld electronic device includes a display operative to display an image, an input control operative to sense a contact motion of the user with the device, a set of motion sensors sensing rotational rate of the device. Contact motion of the user is sensed by an input control and provides contact data to the user interface. The contact motion can be moving a rotatable wheel or cylinder. The contact data is used to control a zooming function for the image displayed on the display.

US 2009/098912-A1 describes a user interface system for controlling size of content displayed on a display screen of a limited display device. The user interface system comprises a first user interface for selecting a first point on the display screen; and a second user interface for performing a resizing operation on content displayed on the display screen using the first point as a center of reference for purpose of performing the resizing operation, wherein the resizing operation is performed in response to user interaction with the first user interface and the second user interface.

US 2004/252119-A1 describes a control framework for organizing, selecting and launching media items including graphical user interfaces coupled with an optional free space control device for collection of the basic control primitives of point, click, scroll, hover and zoom which permit for easy and rapid selection of media items, e.g., movies, songs etc., from large or small collections.

US 2003/076301-A1 describes that a rotational user action supplied by a user via a user input device can provide accelerated scrolling. The accelerated nature of the scrolling enables users to scroll or traverse a lengthy data set (e.g., list of items) faster and with greater ease. The amount of acceleration provided can be performed in successive stages, and/or performed based on the speed of the rotational user action.

Existing methods for manipulating user interface objects on reduced-size personal electronic devices can be inefficient. Further, existing methods, including the methods described in the above-mentioned prior art, generally provide less precision than is preferable.

## SUMMARY

In some embodiments, techniques for navigating a user interface on a personal electronics device based on movements of a crown are disclosed. Systems and computer-readable storage media for performing the processes described above are also disclosed. The present invention is disclosed by the subject-matter of the independent claims. One aspect of the present invention is a method as defined in independent claim 1. Other aspects of the invention are a computer readable storage medium and an electronic device as defined in claims 13 and 14, respectively. Further aspects of the invention are the subject of the dependent claims. Any reference throughout this disclosure to an embodiment may point to alternative aspects relating to the invention, which are not necessarily embodiments encompassed by the claims, rather examples and technical descriptions useful for understanding the invention. The scope of present invention is defined by the claims.

## BRIEF DESCRIPTION OF THE DRAWINGS

FIG. 1 illustrates an exemplary personal electronic device.
FIG. 2 illustrates an exemplary user interface.
FIG. 3 illustrates an exemplary user interface.
FIG. 4 illustrates an exemplary user interface.
FIG. 5 illustrates an exemplary user interface.
FIG. 6 illustrates an exemplary user interface.
FIG. 7 illustrates an exemplary user interface.
FIG. 8 illustrates an exemplary user interface.
FIG. 9 illustrates an exemplary logical structure of a user interface.
FIG. 10 illustrates an exemplary user interface.
FIG. 11 illustrates an exemplary user interface.
FIG. 12 illustrates an exemplary user interface.
FIG. 13 illustrates an exemplary user interface transition.
FIG. 14 illustrates an exemplary user interface.
FIG. 15 illustrates an exemplary user interface.
FIG. 16 illustrates an exemplary user interface transition.
FIG. 17 illustrates an exemplary user interface.
FIG. 18 illustrates an exemplary user interface.
FIG. 19 illustrates an exemplary user interface transition.
FIG. 20 illustrates an exemplary user interface.
FIG. 21 illustrates an exemplary user interface.
FIG. 22 illustrates an exemplary user interface and transition.
FIG. 23 illustrates an exemplary user interface.
FIG. 24 illustrates an exemplary user interface and transition.
FIG. 25A and FIG. 25B illustrate an exemplary user interface.
FIG. 26 illustrates an exemplary user interface.
FIG. 27 illustrates an exemplary user interface and transition.
FIG. 28 illustrates an exemplary user interface.
FIG. 29 illustrates an exemplary user interface.
FIG. 30 illustrates an exemplary user interface and transition.
FIG. 31 illustrates an exemplary user interface.
FIG. 32 illustrates an exemplary user interface.
FIG. 33 illustrates an exemplary user interface.
FIG. 34 illustrates an exemplary user interface.
FIG. 35 illustrates an exemplary process.
FIG. 36 illustrates an exemplary computing system.
FIG. 37 illustrates an exemplary personal electronic device.
FIG. 38 illustrates an exemplary personal electronic device.

FIG. 39 illustrates an exemplary personal electronic device.
FIG. 40 illustrates an exemplary user interface.
FIG. 41 illustrates an exemplary logical structure of a user interface.
FIG. 42 illustrates an exemplary user interface.

**DETAILED DESCRIPTION**

In the following description of the disclosure and examples, reference is made to the accompanying drawings in which it is shown by way of illustration specific examples that can be practiced. It is to be understood that other examples can be practiced and structural changes can be made without departing from the scope of the disclosure.

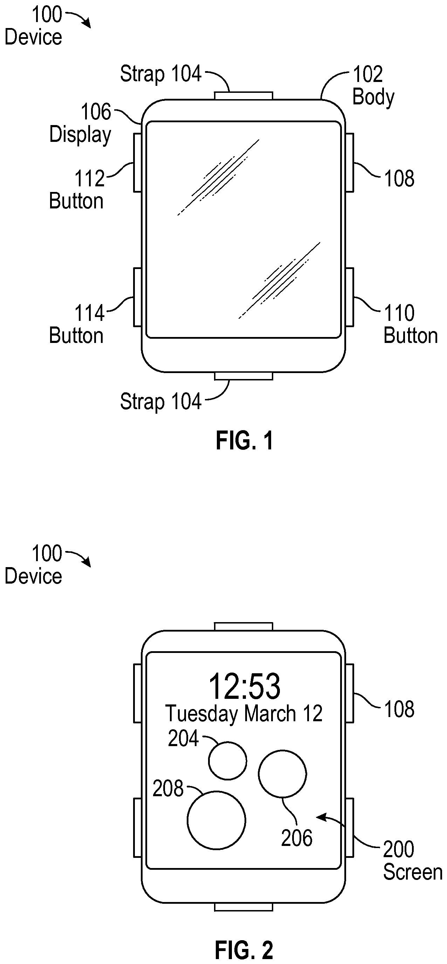

FIG. 1 illustrates exemplary personal electronic device 100. In the illustrated example, device 100 is a watch that generally includes body 102 and strap 104 for affixing device 100 to the body of a user. That is, device 100 is wearable. Body 102 can designed to couple with straps 104. Device 100 can have touch-sensitive display screen (hereafter touchscreen) 106 and crown 108. In some embodiments, device 100 can have one or more buttons 110, 112, and 114. In some embodiments, device 100 does not have buttons 110, 112, nor 114.

Conventionally, the term "crown," in the context of a watch, refers to the cap atop a stem for winding the watch. In the context of a personal electronic device, the crown can be a physical component of the electronic device, rather than a virtual crown on a touch sensitive display. Crown 108 can be mechanical meaning that it can be connected to a sensor for converting physical movement of the crown into electrical signals. Crown 108 can rotate in two directions of rotation (e.g., forward and backward). Crown 108 can also be pushed in towards the body of device 100 and/or be pulled away from device 100. Crown 108 can be touch-sensitive, for example, using capacitive touch technologies that can detect whether a user is touching the crown. Moreover, crown 108 can further be rocked in one or more directions or translated along a track along an edge or at least partially around a perimeter of body 102. In some examples, more than one crown 108 can be used. The visual appearance of crown 108 can, but need not, resemble crowns of conventional watches. There examples described herein refer to crown rotations, pushes, pulls, and/or touches, each of which constitutes a physical state of the crown.

Buttons 110, 112, and 114, if included, can each be a physical or a touch-sensitive button. That is, the buttons may be, for example, physical buttons or capacitive buttons. Further, body 102, which can include a bezel, may have predetermined regions on the bezel that act as buttons.

Touchscreen 106 can include a display device, such as a liquid crystal display (LCD), light-emitting diode (LED) display, organic light-emitting diode (OLED) display, or the like, positioned partially or fully behind or in front of a touch sensor panel implemented using any desired touch sensing technology, such as mutual-capacitance touch sensing, self-capacitance touch sensing, resistive touch sensing, projection scan touch sensing, or the like. Touchscreen 106 can allow a user to perform various functions by touching over hovering near the touch sensor panel using one or more fingers or other object.

In some examples, device 100 can further include one or more pressure sensors (not shown) for detecting a force or pressure applied to the display. The force or pressure applied to touchscreen 106 can be used as an input to device 100 to perform any desired operation, such as making a selection, entering or exiting a menu, causing the display of additional options/actions, or the like. In some examples, different operations can be performed based on the amount of force or pressure being applied to touchscreen 106. The one or more pressure sensors can further be used to determine a position that the force is being applied to touchscreen 106.

1. Crown-based user interface control

FIGs. 2-7 illustrate exemplary user interfaces that respond to movements of crown 108 (FIG. 1). FIG. 2 shows exemplary screen 200 that can be displayed by device 100. Screen 200 can be, for example, a home screen that appears upon power-on of device 100 or that appears initially when the touchscreen display of device 100 powers-on (including wake up from a sleep state). Icons 204, 206, and 208 can be displayed in screen 200. In some embodiments, the icons can correspond to applications operable on device 100, meaning that the applications can be installed onto and/or can execute as a service on device 100. A touch (e.g., a finger tap) on an icon causes the corresponding application to launch, meaning that the application runs in the foreground of device 100 and appears on touchscreen 106. In some embodiments, the icons can correspond to text documents, media items, web pages, e-mail messages, or the like.

Device 100 can select icons 204, 206, and 208 out of larger set of available icons for display on screen 200 because these icons have information relevant to the user at the current time. For example, icon 204 can correspond to a messaging application in which the user has just received an incoming message, and icon 206 can correspond to a calendar application where the user has an upcoming calendar appointment entry.

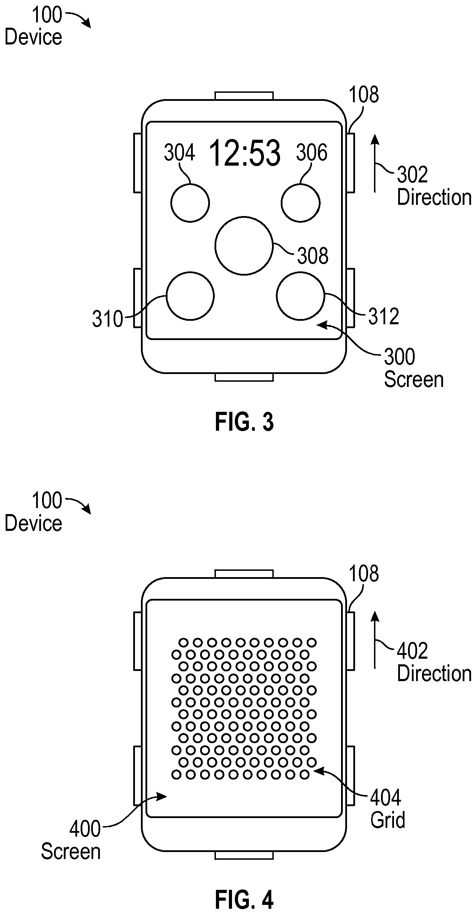

FIG. 3 shows exemplary screen 300, which can be displayed by device 100 in response to a rotation of crown 108 in direction 302 while screen 200 (FIG. 2) is displayed. Screen 300 can show, for example, a user's favorite icons, selected previously by the user from a larger set of available icons. Also, screen 300 can include icons, selected from the larger set of available icons, by device 100 based on a user's frequency of access of the icons. Exemplary icons 304, 306, 308, 310, and 312 displayed in screen 300 can each correspond to an application operable on device 100. A touch (e.g., a finger tap) on an icon causes the corresponding application to launch.

FIG. 4 shows exemplary screen 400, which can be displayed by device 100 in response to a rotation of crown 108 in direction 402 while screen 300 (FIG. 3) is displayed. Screen 400 can show, for example, icons corresponding to all of the applications operable on device 100. Because a large number of applications can be operable on device 100, screen 400 can include a large number of icons. When many icons are displayed, the icons can be sized accordingly so that they can fit within touchscreen 106, or sized so that at least a representative number or predetermined percentage of icons can fit visibly within touchscreen 106.

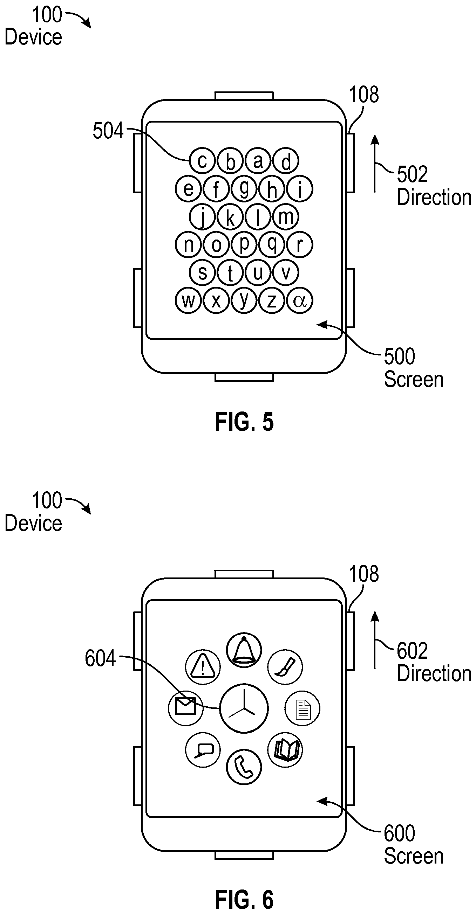

FIG. 5 shows exemplary screen 500, which can be displayed by device 100 in response to a rotation of crown 108 in direction 502 while screen 400 (FIG. 4) is displayed. Screen 500 can show, for example, icons corresponding to a subset of the applications operable on device 100. Because fewer icons are displayed on screen 500 as compared with screen 400, the icons that are displayed on screen 500, e.g., icon 504, can become larger and can have additional fidelity as compared with the display of icons on screen 400. For example, icons on screen 500 can have indicia, in the form of text and/or imagery, identifying its corresponding application. As shown, icon 504 uses the letter "c" to suggest the name of the corresponding application begins with a "c", as in clock. In some embodiments, a touch (e.g., a finger tap) on an icon causes the corresponding application to launch.

FIG. 6 shows exemplary screen 600, which can be displayed by device 100 in response to a rotation of crown 108 in direction 602. Screen 600 can show, for example, a further winnowed subset of icons, as compared with screen 500, that correspond to applications operable on device 100. Because even fewer icons are displayed on screen 600 as compared with screen 500 (FIG. 5), the icons that are displayed (e.g., icon 604) can enlarge further and can have additional fidelity as compared with the display of icons on screens 200, 300, 400, and 500. For example, icon 604 can have the image of a clock that displays the current time. In some embodiments, a touch (e.g., a finger tap) on an icon causes the corresponding application to launch.

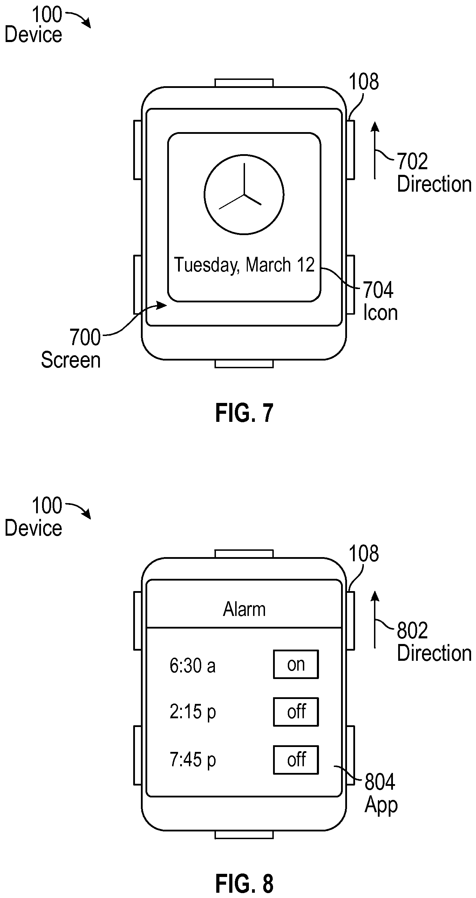

FIGs. 7 and 8 show exemplary screens 700 and 800, respectively, that can be displayed by device 100 in response to a rotation of crown 108 in direction 702 while screen 600 (FIG. 6) is displayed.

With reference to FIG. 7, in some embodiments, screen 700 can be displayed in response to crown rotation in direction 702 when screen 600 (FIG. 6) is displayed. Because a single icon 704 is displayed on screen 700, icon 704 can have additional fidelity as compared with the previous screens. For example, icon 704 can have the image of a clock that displays day-date information along with the current time. A touch (e.g., a finger tap) on icon 704 causes the corresponding application to launch.

Turning to FIG. 8, in some embodiments, screen 800 can be displayed in response to crown rotation in direction 802 when screen 600 (FIG. 6) is displayed. Screen 800 shows application 804, which corresponds to icon 704 (FIG. 7), operating in the foreground of device 100. That is, application 804 launched in response to crown rotation in direction 802. Exemplary application 804 can be a clock application that provides alarm features. Also, in some embodiments, screen 800 becomes displayed in response to crown rotation in direction 802 when screen 700 FIG. 7) is displayed.

Screens 200-700 (FIGs. 2-7) described above can be logically organized as planes of information along an axis. Under this organization, a given screen of icons can be thought of as a plane, defined by two axes (e.g., x- and y- axes), having icons spatially positioned thereon. Multiple planes can be organized along a third axis orthogonal to at least one of the x- or y-axes, called the z-axis. (The z-axis can be perpendicular to the plane formed by the x- and y-axes.)

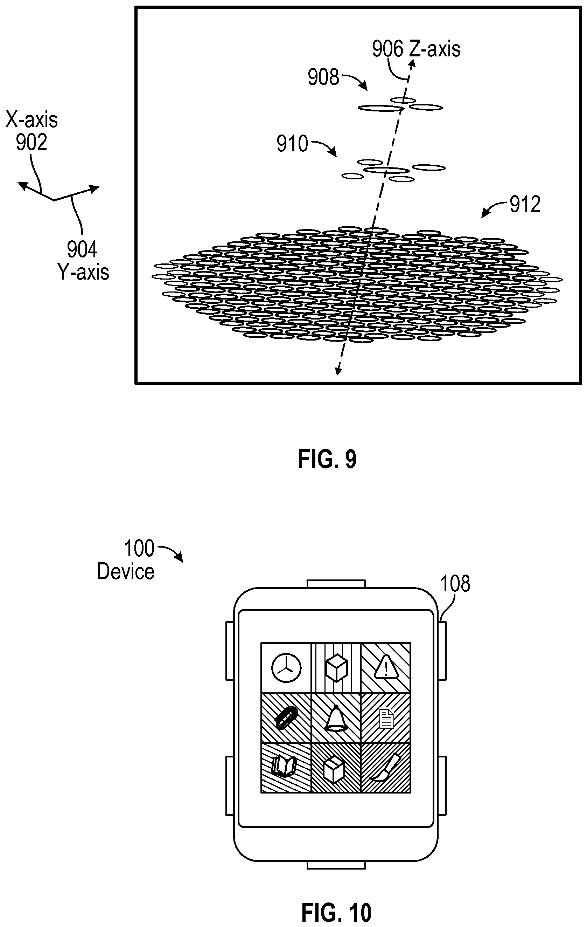

This logical organization is illustrated by FIG. 9, in which x-axis 902 and y-axis 904 form a plane co-planar with the touchscreen screen surface of device 100 (FIG. 1) and z-axis 906 is perpendicular to the x/y-plane formed by axes 902 and 904. Plane 908 can correspond to screen 200 (FIG. 2). Plane 910 can correspond to screen 300 (FIG. 3). Plane 912 can represent the collection of icons that represent the operable applications of a personal electronic device. Thus, different viewpoints of plane 912 can correspond to screens 400-700 (FIGs. 4-7). Planes 908 and 910 can be related to plane 912 in that planes 908 and 910 can each include a subset of the icons available on plane 912. The particular plane of information (i.e., screen of icons) that is to be displayed on a personal electronic device can be selected via crown movement, such as crown rotation. That is, crown movement can be used to traverse the planes of information intersecting z-axis 906, or to provide alternative views of a given plane (e.g., plane 912).

In some embodiments, when an end of the z-axis (e.g., the top or bottom-most plane) is reached via crown movement, the displayed information (e.g., screen of icons) produces a rubberband effect to indicate that the end has been reached. Consider the situation in which a user has, through crown input, reached the bottom most plane of information. As the user provides additional crown input in the same direction, the displayed collection of icons shrink (to the extent possible) in accordance with the crown movement until the movement stops. When the crown movement stops, the displayed icons return from their shrunken size back to their normal size via on-screen animation, thereby producing the visual effect of rubberbanding.

One notable benefit of this logical organization is that different planes of information need not be (but can be) zoomed subsets of one another. That is, for example, planes 908 and 910 can contain entire different icons out of those icons available on a personal electronic device, but yet the different planes of information can be accessed efficiently by a user.

Alternatively, screens 200-700 (FIG. 2-7) can be logically organized as subsets of information belonging to different modal states of a personal electronic device. Under this organization, screens 200 and 300 can correspond to first and a second modal state of the device, and screens 400-700 can correspond to a third modal state, for example. The personal electronic device can cycle through modal states in response to crown pushes, and can display screens 200 or 300 in the first and second modal states, respectively. In alternative embodiments, modal states may be cycled using buttons 110, 112, or 114. When multiple screens are available within a particular modal state (e.g., the third modal state), the device can switch from the display of one screen (e.g., 300) to another screen (e.g., 400) based on crown rotation. On-screen user interface elements, such as paging dots, can be used to indicate the availability of additional screens for display within a particular modal state.

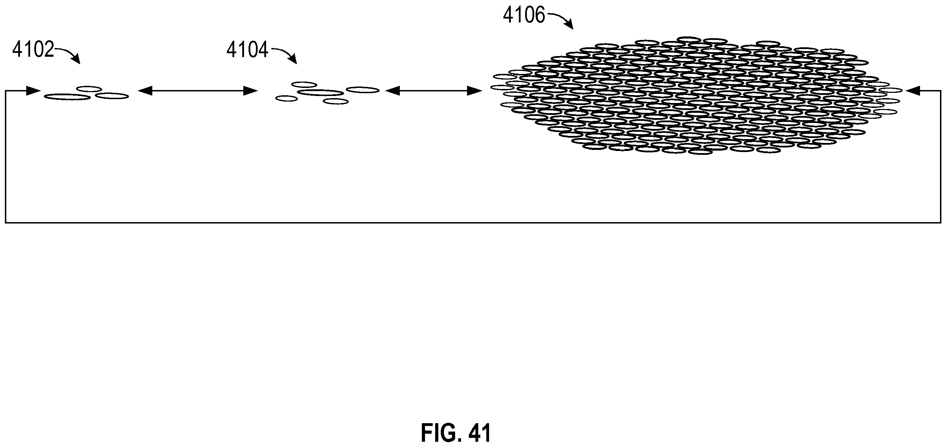

This logical arrangement is illustrated by FIG. 41. As shown, planes 4102 and 4104 can correspond to screens 200 (FIG. 2) and 300 (FIG. 3) respectively. Plane 4106 can represent the collection of icons that represent the operable applications of a personal electronic device. Thus, different viewpoints of plane 4106 can correspond to screens 400-700 (FIGs. 4-7). The particular plane of information (i.e., screen of icons) that is to be displayed on a personal electronic device can be selected via crown movement, such as crown pushes.

2. Velocity-based crown control

Device 100 (FIG. 1) can consider the angular velocity of rotation of crown 108 (FIG. 1) in determining whether one screen of icons should be replaced with another screen of icons. Specifically, device 100 can require crown 108 to rotate above a predetermined angular velocity before changing the display of one screen of icons to another. In this way, while slow rotations of crown 108 that are unintended by a user can still cause device 100 to receive crown input indicating angular displacement, the displacement need not be interpreted as having sufficient velocity to cause user interface updates that are unintended. The selection of predetermined angular velocities for this purpose can depend on a number of factors, such as the density of icons currently displayed, the visual arrangement of icons currently displayed, and so forth.

In some embodiments, the minimum angular velocity of crown rotation that is necessary to switch between screens of icons corresponds directly to the instantaneous angular velocity of crown 108 (FIG. 1), meaning that the user interface of device 100, in essence, responds when crown 108 reaches a sufficient angular velocity. In some embodiments, the minimum angular velocity of crown rotation necessary for switching between screens of icons is a calculated velocity that is based on, but not directly equal to, the instantaneous ("current") angular velocity of crown 108. In these embodiments, device 100 can maintain a calculated crown (angular) velocity V in discrete moments in time T according to equation 1:

$$V_T = V_{(T-1)} + \Delta V_{CROWN} - \Delta V_{DRAG}. \qquad (EQ.\ 1)$$

In equation 1, $V_T$ represents a calculated crown velocity (speed and direction) at time T, $V_{(T-1)}$ represents the previous velocity (speed and direction) at time T-1, $\Delta V_{CROWN}$ represents the change in velocity caused by the force being applied through the rotation of the crown at time T, and $\Delta V_{DRAG}$ represents the change in velocity due to a drag force. The force being applied, which is reflected through $\Delta V_{CROWN}$, can depend on the current velocity of angular rotation of the crown. Thus, $\Delta V_{CROWN}$ can also depend on the current angular velocity of the crown. In this way, device 100 can provide user interface interactions based not only on instantaneous crown velocity but also based on user input in the form of crown movement over multiple time intervals, even if those intervals are finely divided. Note, typically, in the absence of user input in the form of $\Delta V_{CROWN}$, $V_T$ will approach (and become) zero based on $\Delta V_{DRAG}$ in accordance with EQ. 1, but $V_T$ would not change signs without user input in the form of crown rotation ($\Delta V_{CROWN}$).

Typically, the greater the velocity of angular rotation of the crown, the greater the value of $\Delta V_{CROWN}$ will be. However, the actual mapping between the velocity of angular rotation of the crown and $\Delta V_{CROWN}$ can be varied depending on the desired user interface effect. For example, various linear or non-linear mappings between the velocity of angular rotation of the crown and $\Delta V_{CROWN}$ can be used. In another example, the mapping can depend on the number of icons and/or icon arrangement currently being displayed.

Also, $\Delta V_{DRAG}$ can take on various values. For example, $\Delta V_{DRAG}$ can depend on the velocity of crown rotation such that at greater velocities, a greater opposing change in velocity ($\Delta V_{DRAG}$) can be produced. In another example, $\Delta V_{DRAG}$ can have a constant value. In yet another example, $\Delta V_{DRAG}$ can be based on the number of current displayed icons and/or the currently displayed icon arrangement. It should be appreciated that the above-described requirements

of $\Delta V_{CROWN}$ and $\Delta V_{DRAG}$ can be changed to produce desirable user interface effects.

As can be seen from EQ. 1, the maintained velocity ($V_T$) can continue to increase as long as $\Delta V_{CROWN}$ is greater than $\Delta V_{DRAG}$. Additionally, $V_T$ can have non-zero values even when no $\Delta V_{CROWN}$ input is being received, meaning that user interface screens can continue to change without the user rotating the crown. When this occurs, screens can stop changing based on the maintained velocity at the time the user stops rotating the crown and the $\Delta V_{DRAG}$ component.

In some embodiments, when the crown is rotated in a direction corresponding to a rotation direction that is opposite the current user interface changes, the $V_{(T-1)}$ component can be reset to a value of zero, allowing the user to quickly change the direction of the screen changes without having to provide a force sufficient to offset the $V_T$.

In other embodiments, different physical crown states other than rotation of the crown are used to navigate through displayed icons.

3. User interface appearance

Icons can take on various visual appearances. For example, icons can be rectangular in shape, as shown in FIG. 10. As another example, icons can be circular, as shown in FIGs. 2-7. Further, icons can take on various spatial arrangement schemes, meaning that icons can be arranged along the rows and columns of an invisible grid. Grids can be symmetrical or non-symmetrical. In FIG. 10, a symmetrical grid is used, for example. In FIG. 5, a non-symmetrical grid having x icons arranged on a first row and *y* icons arranged along a second row is used, for example.

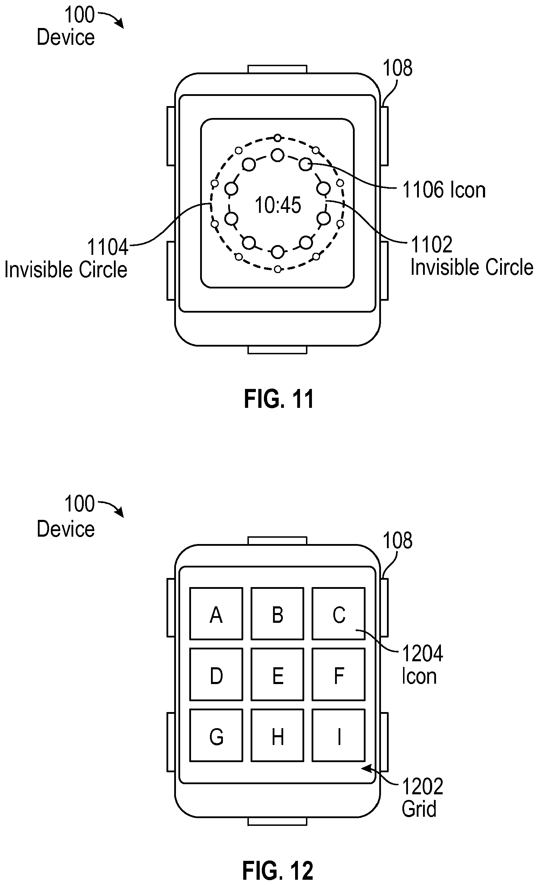

FIG. 11 illustrates a radial icon arrangement scheme where circular icons are aligned along the circumference of invisible circles 1102 and 1104 of different diameters. Invisible circles 1102 and 1104 are, but need not be, concentric. Icons, such as icon 1106, arranged along different invisible circles can have different sizes. As shown, icons arranged along invisible circle 1102 are closer to the center of device 100 and are larger than those arranged along invisible circle 1104. Also, although not illustrated in FIG. 11, icons in a radial arrangement can be arranged along more than two invisible circles.

The distance that a particular icon is position from the center of the radial icon arrangement can depend on different factors. For example, the distance can be proportional to frequency of use of the icon; an icon that is used frequently is closer to the center. As another example, the distance can depend on whether an incoming notification has been received for (the application corresponding to) the icon. As another example, the distance can be user-defined, or can be otherwise determined by device 100 (i.e., curated).

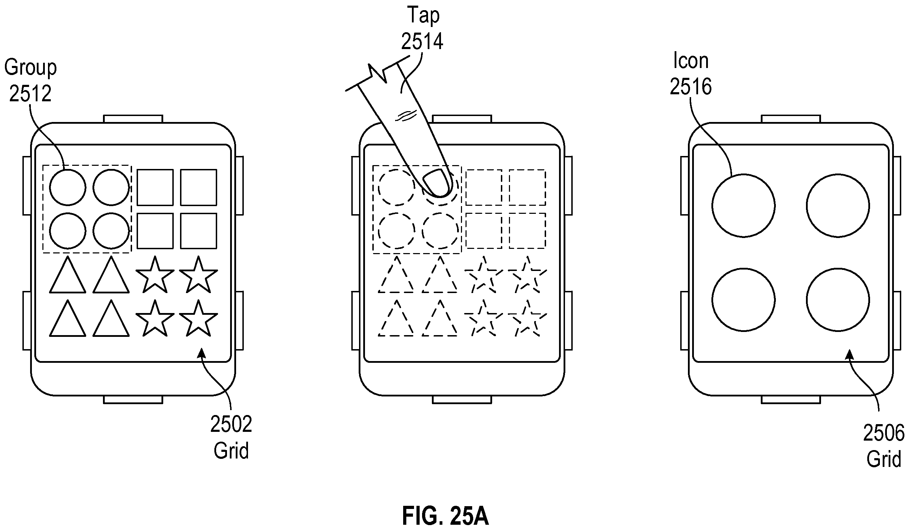

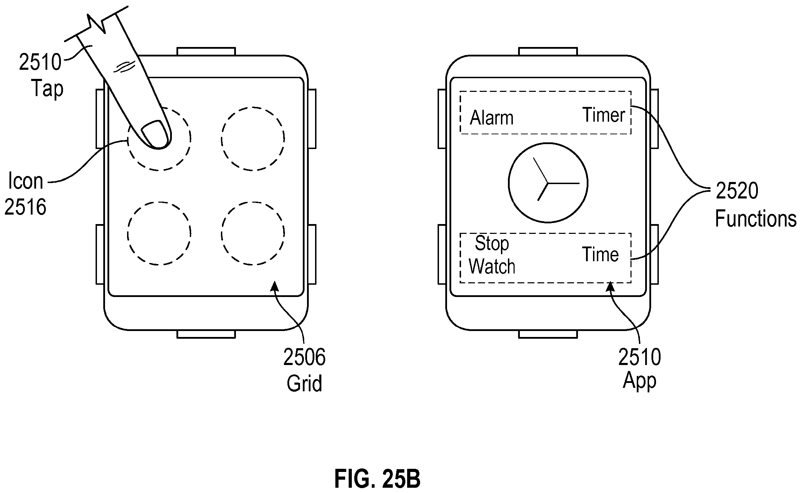

FIG. 25A illustrates an arrangement of icons into icon groups. On grid 2502, four groups of icons, including icon group 2512, are displayed. In response to a touch input, such as a finger tap at touchscreen location 2514 on group 2512, the icons within group 2512 can be displayed in enlarged form. In grid 2506, the icons within group 2512, including icon 2516, are displayed in enlarged form. FIG. 25B illustrates an arrangement of application functionalities into groups. On grid 2508, as discussed above, the four icons of icon group 2512 are displayed on grid 2506. A selection of icon 2516 (e.g., via finger tap 2518) can cause a group of functions 2520 provided by application 2510 (which corresponds to icon 2508) to be displayed.

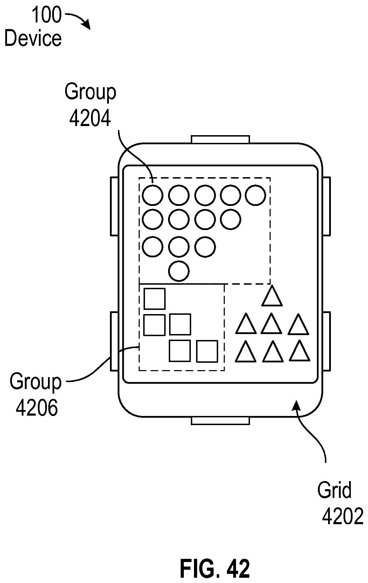

The size and shape of icon groups can be organic or defined. Icon groups that are defined, such as icon group 2512 in grid 2502 (FIG. 25A), share a predefined group size and group shape. Organic icon groups, shown in FIG. 42, can be of a user-defined group size and/or group shape. For example, icon groups 4204 and 4206 in grid 4202 are of different user-defined shapes and sizes. In some embodiments, organic icon groups are defined using software running on a computer external to the personal electronic device and downloaded onto the personal electronic device.

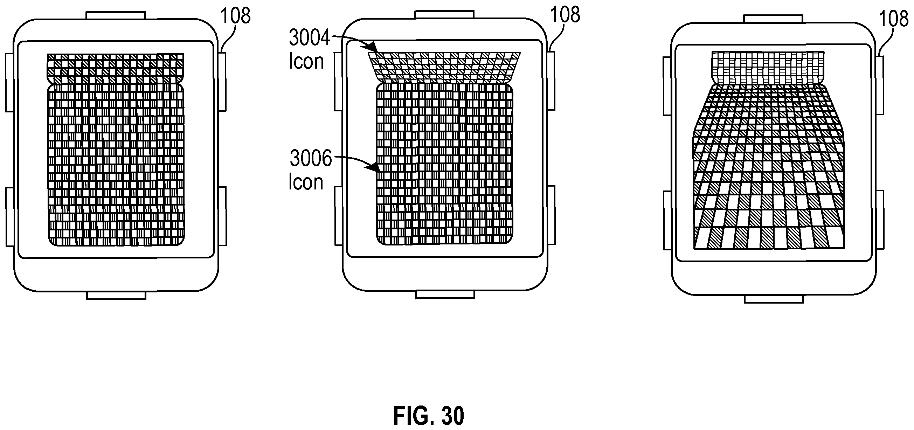

FIG. 30 illustrates an icon arrangement scheme where icons are arranged similar to pages of a rolodex. Pages of exemplary rolodex 3002 can flip in response to crown rotation. For example, page (icon) 3004 can flip downward onto page (icon) 3006 in response to a crown rotation.

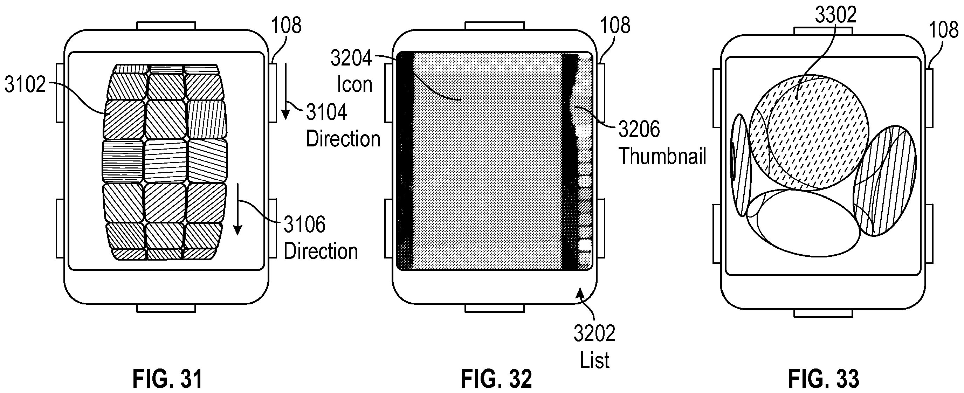

FIG. 31 illustrates an icon arrangement scheme where icons are arranged on the outer circumference of a spinning dial. Exemplary spinning dial 3102 can spin in response to crown rotation. For example, a crown rotation in direction 3104 can cause dial 3102 to spin in the same direction (3106). Also, a crown push (or pull) can change the number of columns in 3102, allowing the icons of the remaining columns to be enlarged and/or to have increased fidelity.

FIG. 32 illustrates an icon arrangement scheme in the form of a thumbnailed list 202. Icon 3204 within exemplary thumbnailed list 3202 can have corresponding thumbnail 3206. The icons of thumbnailed list 3202 can be traversed via crown rotation. A specific icon, such as icon 3204, can be selected directly for display by touching corresponding thumbnail 3206.

FIG. 33 illustrates an arrangement scheme where icons are aligned with the surface of an invisible sphere or polyhedron. Icons on the foreground surface of the invisible sphere, such as icon 3302, can be displayed. Icons on the far side of the invisible sphere's surface are not displayed. The invisible sphere can rotate in response to crown rotation and/or touchscreen input, thereby changing the specific icons that are displayed.

During operation, device 100 (FIG. 1) can use one or more of the icon arrangement schemes described above. The particular arrangement(s) used by device 10 can be user-selected and/or system-selected. That is, a user may be permitted to identify one or more preferred arrangements for display. Also, arrangements can be selected by device 100 based on criteria such as the total number of applications installed on the device, the number frequently accessed icons, and so forth.

Further, the specific ordering and placement of icons within a particular icon arrangement scheme can be user-selected and/or system-selected. For example, a user can be permitted to specify the position of an icon on a given screen. Also, icon placement can be determined by device 100 (i.e., curated) based on criteria such as the frequency of use of particular icons, a calculated relevance, and so forth.

4. Responses to user input

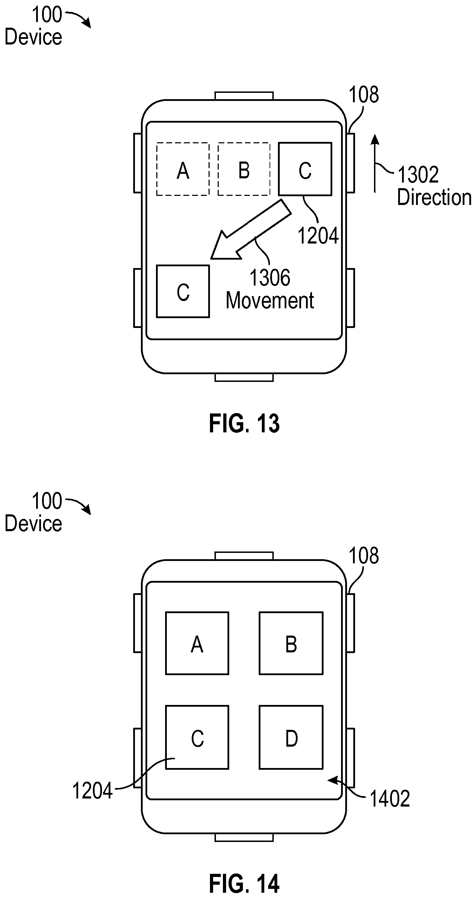

Displayed icons can respond to user input. FIGs. 12-14 illustrate a rearrangement of displayed icons in response to crown rotation. In FIG. 12, nine icons are displayed along a 3-by-3 symmetric grid 1202. Icon 1204 is displayed in the top-right position of grid 1202. As discussed above with respect to FIGs. 4-7, a rotation of crown 108 can cause device 100 to reduce the number of displayed icons. For example, a rotation of crown 108 can cause device 100 to display a 2-by-2 grid, thereby reducing the number of displayed icons. FIG. 13 illustrates an exemplary transition to a 2-by-2 grid in response to a crown rotation in direction 1302. As shown, in response to crown rotation 1302, icon 1204 is translated visibly on-screen from its top-right position in the 3-by-3 grid of FIG. 12 to its new position in the 2-by-2 grid to be displayed. Specifically, as shown in FIG. 14, icon 1204 is translated to the lower-left corner of 2-by-2 grid 1402. Further, icons that are to remain displayed in the 2-by-2 grid after the transition from grid 1202 are enlarged and positioned into the 2-by-2 grid 1402.

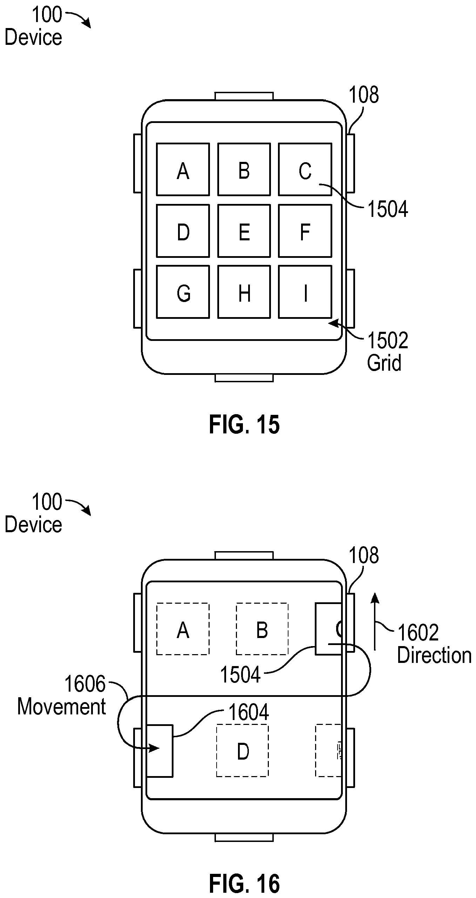

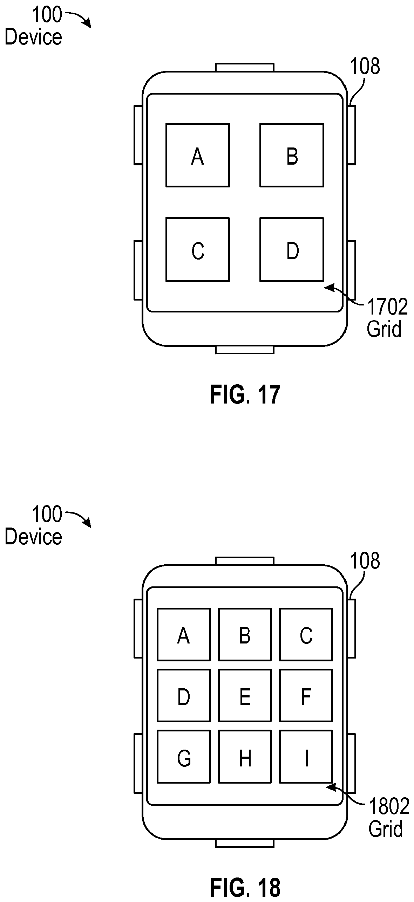

FIGs. 15-17 illustrate another rearrangement of icons in response to crown rotation. In FIG. 15, nine icons are displayed along a 3-by-3 symmetric grid 1502. Icon 1504 is displayed in the top-right position of grid 1502. As shown in FIG. 16, in response to crown rotation 1602, icon 1504 is translated off-screen from its position in grid 1502 (FIG. 15) while it is translated into its new position in the 2-by-2 grid to be displayed. To put another way, during the transition illustrated by FIG. 16, icon 1504 can be split into two portions that are displayed in two separate, non-abutting positions of the touchscreen of device 100. More specifically, while one portion of icon 1504 remains partially displayed in the top-right corner as icon 1504 is translated off-screen, the remaining portion of 1504 is partially displayed in the lower-left corner as it is translated on-screen. As shown in FIG. 17, icon 1504 is translated to the lower-left corner of 2-by-2 grid 1702. Further, icons that are to remain displayed in the 2-by-2 grid after the transition from grid 1502 are enlarged and positioned into the 2-by-2 grid 1702.

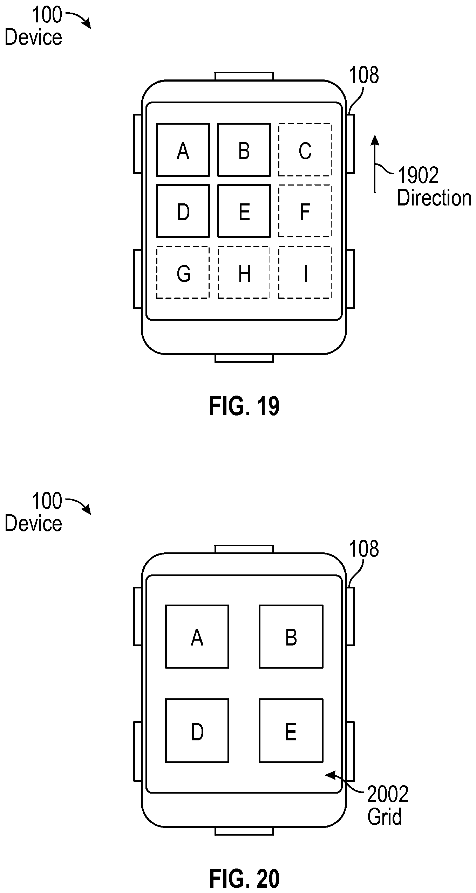

FIGs. 18-20 illustrate another rearrangement of icons in response to crown rotation. In FIG. 18, nine icons are displayed along a 3-by-3 symmetric grid 1802. As shown in FIG. 19, in response to crown rotation 1902, the icons along the right and bottom boundaries of grid 1802 (FIG. 18) are removed from display while the remaining icons are enlarged. The remaining icons are displayed enlarged as shown in grid 2002 of FIG. 20.

It should be noted that in the exemplary screens shown in FIGs. 12-20, the icon displayed in the upper-left corner (i.e., marked "A") is anchored, meaning that the above-described transitions do not cause the icon to move away from the upper-left corner. It is possible, however, to unanchor such an icon through user input, as discussed below.

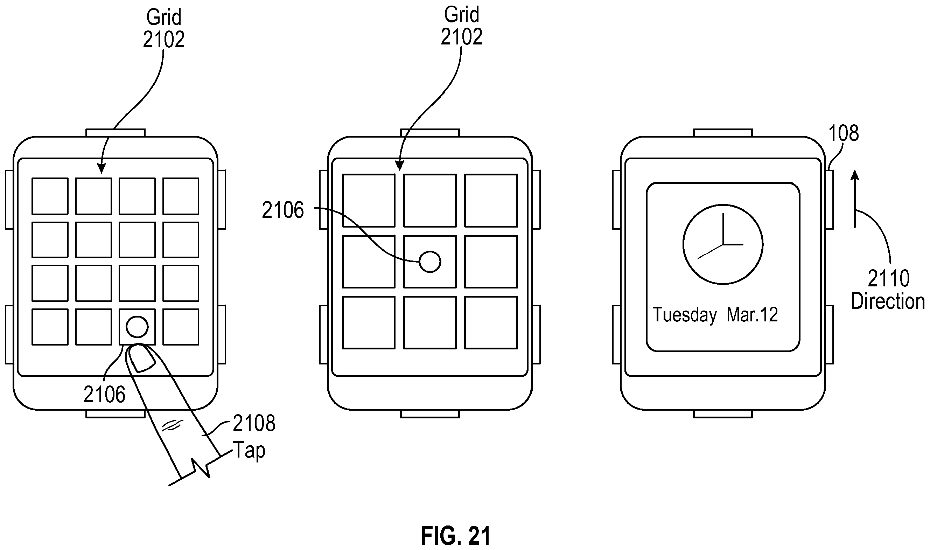

FIG. 21 illustrates a rearrangement of icons in response to touchscreen input. As shown, icon 2106 is displayed in the bottom row of 4-by-4 grid 2012. In response to a finger tap 2104 on icon 2106, 3-by-3 grid 2108 is displayed with icon 2106 enlarged in the center. Notably, the icon marked "A," which is displayed in grid 2012, is no longer displayed in grid 2108. FIG. 21 also illustrates an update of displayed icons in response to crown rotation. Specifically, in response to crown rotation 2110, icon 2106 is further enlarged and becomes the only icon displayed on-screen.

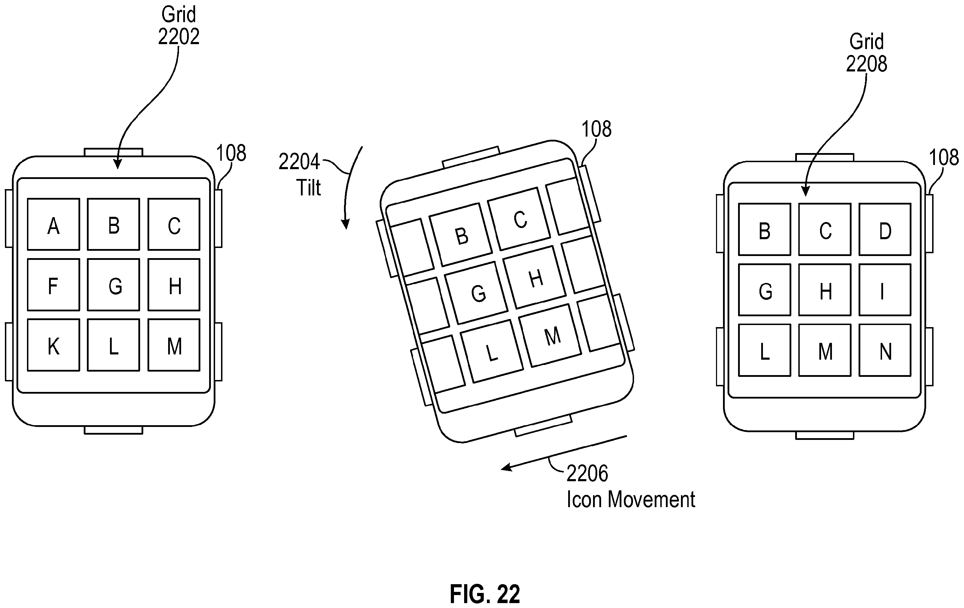

FIG. 22 illustrates a rearrangement of icons in response to movement of device 100. Device movement can be detected using one or more sensors, for example, a gyroscope. As shown, various icons are displayed in grid 2202. In response to tilting of device 100 in direction 2204, the displayed icons are translated in direction 2206, resulting in the display of different icons in grid 2208. Specifically, in response to the leftward tilting of device 100 in direction 2204, the icons of grid 2202 translate in the left direction 2206. In some embodiments, the translation may be incremental such that a single row or column transitions off a single row or column transitions onto the display. Alternatively, a whole screen of icons may transition off as a completely new set of icons transition onto the display.

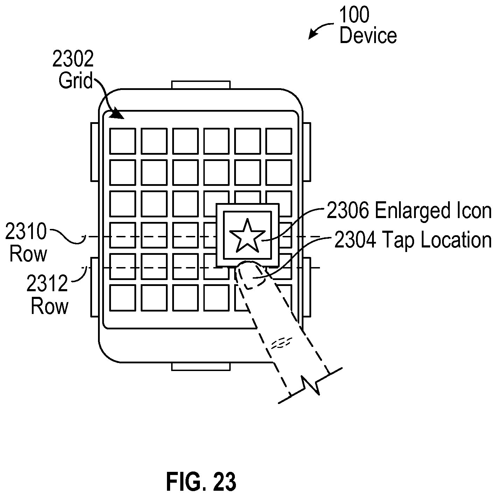

FIG. 23 illustrates a change in icon appearance in response to touchscreen input. As shown, in response to a touch at location 2304, icon 2306 becomes enlarged. Notably, icon 2306 is not located at location 2304, rather, icon 2306 (in its unenlarged state) is in row 2310 above touch location 2304 which is along row 2312. In this way, user visibility of icon 2306 is improved both because the icon is enlarged and because the icon is not blocked from view by the potentially opaque object that is touching device 100. It should be noted that more than one icon can be enlarged in response to a nearby touch. Multiple icons can be enlarged at different levels of magnification inversely proportional to the distance between each icon being enlarged and the touch location.

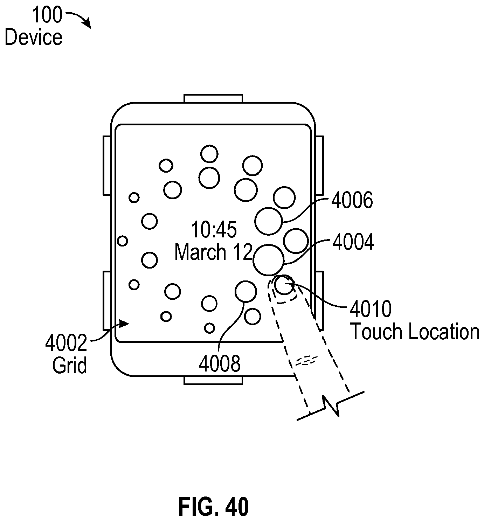

FIG. 40 illustrates icon movements that account for physical interaction between nearby icons. As shown, grid 4002 includes a number of icons arranged in a radial arrangement. In response a touch input at location 4010, a number of icons are enlarged to at different levels of magnification. Notably, the enlarging of icon 4004 can cause adjacent icons 4006 and 4008 to move away from icon 4004 so the icons do not block each other from view.

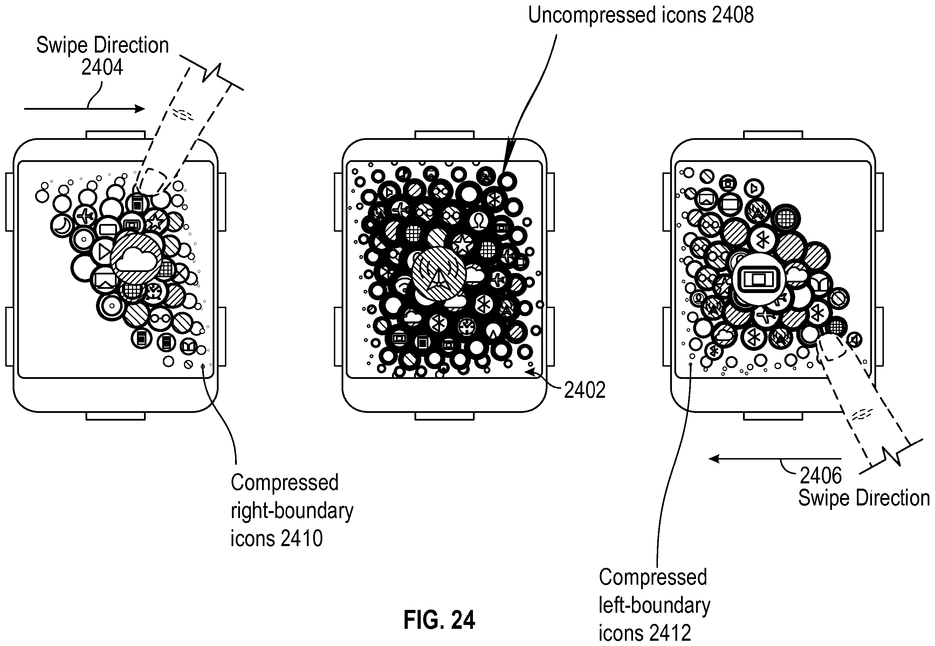

FIG. 24 illustrates icon movements that account for interaction between icons and grid boundaries. As shown, a number of icons are displayed according to non-symmetrical grid 2402. The displayed icons include uncompressed icons 2408. In response to touch input in the form of a rightward gesture in direction 2404, icons on the right boundary of grid 2402 can be compressed into compressed icons 2406 so that icons from the left side of grid 2402 are more predominately displayed either in enlarged or unenlarged form. Also, in response to a touch gesture in the leftward direction 2406, icons that are on the left boundary of grid 2402 can be compressed into compressed icons 2412 so that icons from the right side of grid 2402 are more predominately displayed. The above-described interaction allows all, or substantially all, icons to be simultaneously displayed while allowing a user to easily view and select an icon. Note that this compression may occur in a symmetrical grid, although not shown.

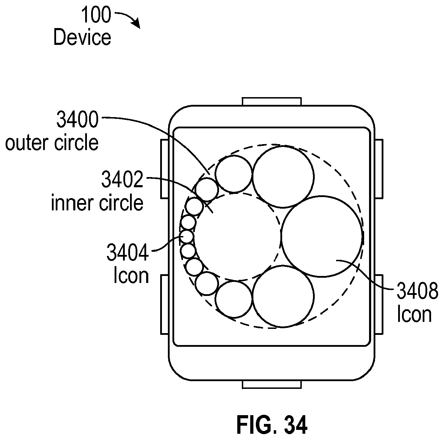

FIG. 34 illustrates icon movements that account for interaction between grid boundaries and nearby icons. In the radial arrangement of FIG. 34, icons are arranged between invisible inner circle 3402 and invisible outer boundary circle 3400. Outer circle 3400 can be sized based on the physical size the touchscreen of device 100. Inner circle 3402 can be sized based on design and/or user preferences. Inner circle 3402 can also be sized based on user input, such as a crown rotation. Inner circle 3402 can respond to touchscreen input within its surface area. For example, a touch down that occurs within the surface area of inner circle 3402 and subsequent touch movement can be interpreted as panning of inner circle 3402. When inner circle 3402 is panned, the icons that are arranged between the inner circle 3402 and outer circle 3400, such as icons 3404 and 3408, can be resize based on the available spacing between inner circle 3402 and outer circle 3400, the number of icons being displayed, and the sizes of adjacent icons. For example, in response to the rightward panning of circle 3402, icon 3404 can increase in size, and the enlarging of icon 3404 can cause icon 3408 to decrease in size.

Note, in the absence of user input, displayed icons can be programmed to move on-screen to prevent screen burn-in. Also, icon arrangements can respond to multi-touch gestures. For example, a two-finger downward gesture on the touchscreen of device 100 (FIG. 1) can cause the display of system information such as a status bar. As another example, a two-finger gesture in which the two fingers move in opposite directions can configure device 100 (FIG. 1) for left-handed or right-handed use.

5. Additional features

Turning back to FIG. 2, home screen 200 can display system-generated information such as alerts. For example, home screen 200 can display a reminder that the user has sat for an extended duration and exercise is in order. Also, screen 200 can display a suggestion for rest because the user has a busy calendar for the next morning. Also turning back to FIG. 3, screen 300 can be displayed when device 100 is coupled with a dock.

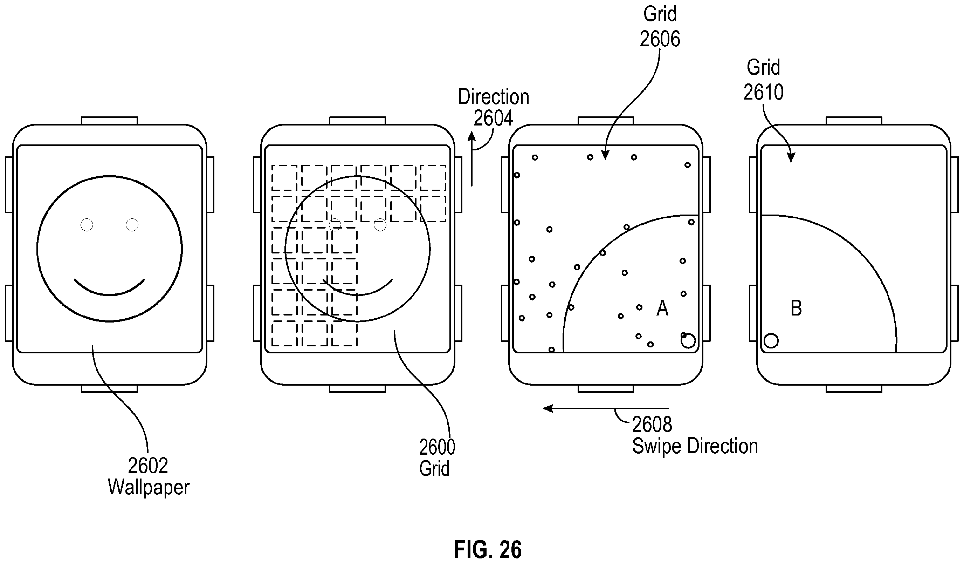

FIG. 26 illustrates the use of wallpaper 2602 to aid user navigation in a grid of icons. As shown, grid 2600 has a relatively large number of icons. In response to crown rotation 2604, a subset of the icons from grid 2600 is enlarged and displayed in grid 2606. In addition, the corresponding portion of wallpaper 2602 displayed in the background of the subset is also displayed, meaning that, for example, if icons from the upper-left quadrant of grid 2600 become displayed in grid 2606, then the upper-left quadrant of wallpaper 2602 is also displayed with grid 2606. Also as shown, in response to a touch gesture in leftward direction 2608, device 100 can display another subset of icons from grid 2600. For example, in grid 2610, icons from the upper-right quadrant of grid 2600 are displayed together with the upper-right quadrant of wallpaper 2600. In this way, a user can determine the relationship between a set of currently displayed icons relative to the totality of icons available for display on device 100.

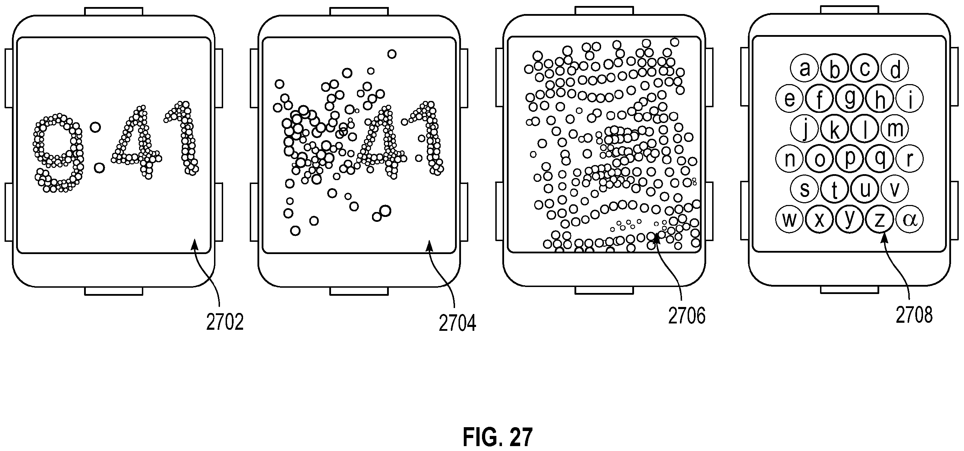

FIG. 27 illustrates an exemplary arrangement of icons where the arrangement provides information, for example current time information, to a user. The arrangement can be displayed in response to crown movement. Also, the arrangement can be displayed after a predetermined period of user input inactivity. For example, screen 2702, which uses icons in small sizes to show the current time, can be displayed after a predetermined period of user input inactivity. Further, in response to a crown rotation, screen 2702 can transition through screens 2704 and 2706 to screen 2708, which shows a grid of icons.

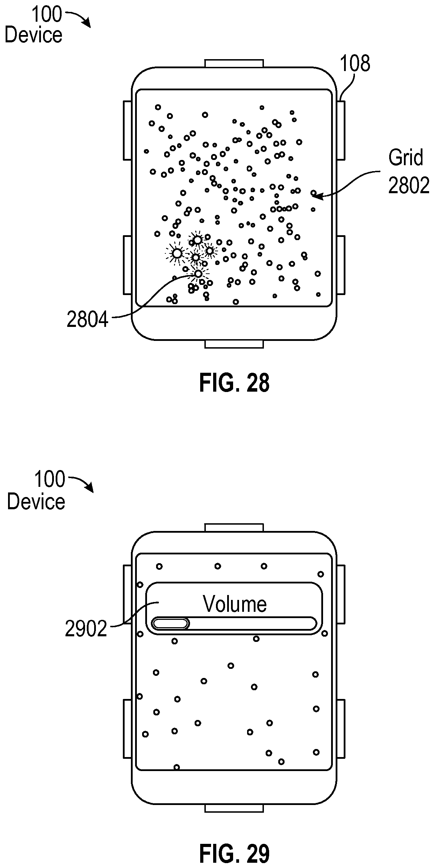

FIG. 28 illustrates an exemplary arrangement of icons (grid 2802) where the color and/or intensity of displayed icons can change in response to incoming information. For example, icon 2804 corresponding to a messaging application can blink or glow when a new message arrives. In some embodiments, the blink or glow can correspond to the popularity of an application in an application store or frequency of use of the application in a larger ecosystem of users. Further, the icons of grid 2802 can show icons representing a larger set of applications available in an application store, beyond those applications that are installed

FIG. 29 illustrates an exemplary display of a contextual message. A contextual message can be displayed in response to detection of a user's touch of crown 108. A contextual message indicates the current functionality of crown 108, which can take on different functions depending on the application that is currently operating in the foreground of device 100. For example, when a music application is operating in the foreground of device 100, a touch on crown 108 can result in the display of contextual message 2902 in the form of a volume indicator, which can indicate to a user that the current functionality of crown 108 is volume control.

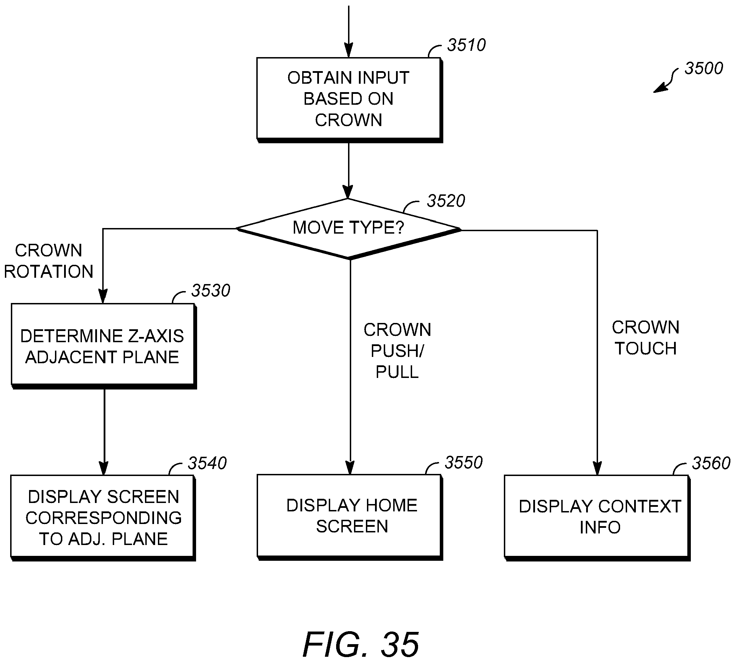

FIG. 35 depicts exemplary process 3500 for providing the user interface techniques described above. At block 3510, input based on crown movement and/or crown touch is received. The crown movement can be a rotation, a push, and/or a pull. At block 3520, a decision is made based on the type of crown movement represented by the received input. If the received input represents a crown rotation, processing proceeds to block 3530. If the received input represents a crown push or pull, processing proceeds to block 3550. If the received input represents a crown touch (without a rotation or a push/pull), processing proceeds to block 3560. At block 3530, the currently displayed screen and its corresponding position along z-axis 906 (FIG. 9) can be determined. In addition, an adjacent level of information along the z-axis 906 can be determined. The adjacent level can be determined based on the direction of the crown rotation that is represented by the received input. A corresponding grid of icons, such as those illustrated by each of FIGs. 4-7, can be displayed. At block 3550, a home screen, such as the exemplary screen 200 of FIG. 2, can be displayed. In the alternative, a user-favorites screen, such as the exemplary screen 300 of FIG. 3, can be displayed. At block 3560, a contextual message, such as the exemplary contextual message 2902 of FIG. 29, can be displayed.

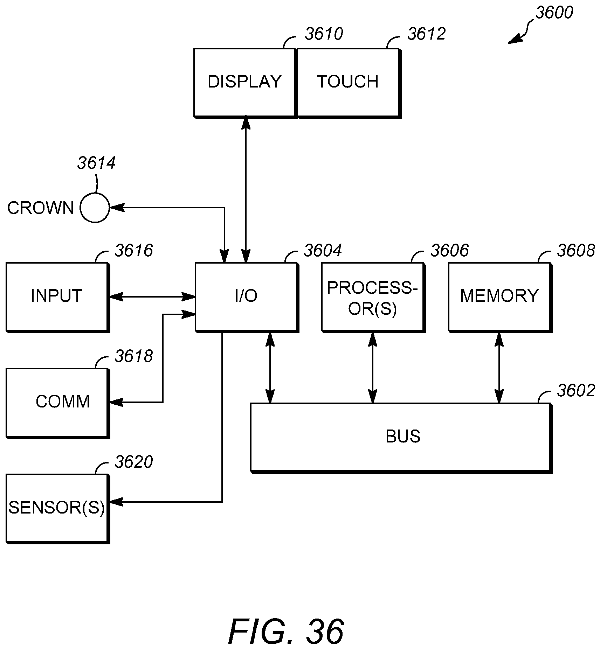

FIG. 36 depicts exemplary computing system 3600 for providing the user interface techniques described above. In some embodiments, computing system 3600 can form device 100. As shown, computing system 3600 can have bus 3602 that connects I/O section 3604, one or more computer processors 3606, and a memory section 3608 together. Memory section 3608 can contain computer-executable instructions and/or data for carrying out the above-described techniques, including process 3500 (FIG. 35). I/O section 3604 can be connected to display 3610, which can have touch-sensitive component 3612. I/O section 3604 can be connected to crown 3614. I/O section 3604 can be connected to input device 3616, which may include buttons. I/O section 3604 can be connected to communication unit 3618, which can provide Wi-Fi, Bluetooth, and/or cellular features, for example. I/O section 3604 can be connected to sensor pack 3620, which can have a gyroscope, a GPS sensor, a light sensor, a gyroscope, an accelerometer, and/or a combination thereof. Note, one or more of the above-described components can be part of a system-on-a-chip.

Memory section 3608 of computing system 3600 can be a non-transitory computer readable storage medium, for storing computer-executable instructions, which, when executed by one or more computer processors 3606, for example, can cause the computer processors to perform the user interface techniques described above, including process 3500 (FIG. 35). The computer-executable instructions can also be stored and/or transported within any non-transitory computer readable storage medium for use by or in connection with an instruction execution system, apparatus, or device, such as a computer-based system, processor-containing system, or other system that can fetch the instructions from the instruction execution system, apparatus, or device and execute the instructions. For purposes of this document, a "non-transitory computer readable storage medium" can be any medium that can contain or store computer-executable instructions for use by or in connection with the instruction execution system, apparatus, or device. The non-transitory computer readable storage medium can include, but is not limited to, magnetic, optical, and/or semiconductor storages. Examples of such storage include magnetic disks, optical discs based on CD, DVD, or Blu-ray technologies, as well as RAM, ROM, EPROM, flash memory, and solid-state memory.

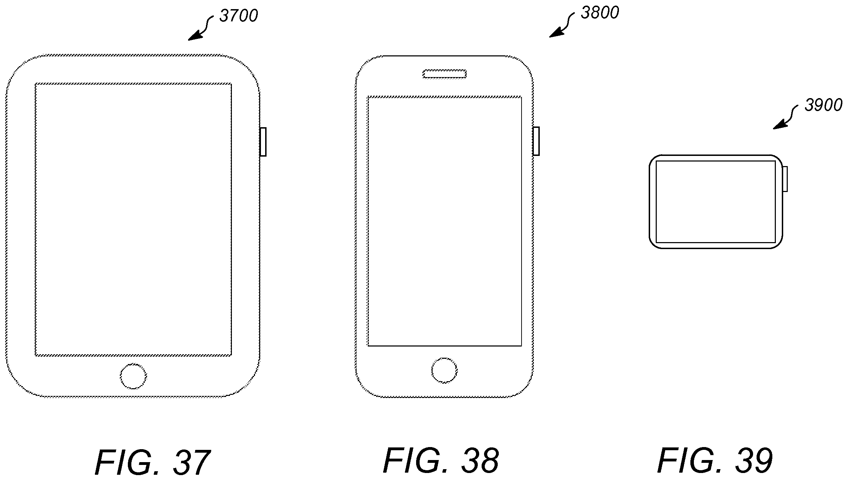

Computing system 3600 is not limited to the components and configuration of FIG. 36, but can include other or additional components in multiple configurations. In some embodiments, system 3600 can form personal electronic device 3700, which is a tablet, as shown in FIG. 37. In some embodiments, computing system 3600 can form personal electronic device 3800, which is a mobile phone, as shown in FIG. 38. In some embodiments, computing system 3600 can form personal electronic device 3900, which is a portal music device, as shown in FIG. 39.

Although the disclosure and examples have been fully described with reference to the accompanying figures, it is to be noted that various changes and modifications will become apparent to those skilled in the art. Such changes and modifications are to be understood as being included within the scope of the disclosure and examples, the scope of the invention being only limited by the appended claims.

**Claims**

1. A computer-implemented method comprising:

   displaying a first plurality of icons (500) on a touch-sensitive display (106) of a wearable electronic device (100);
   receiving a first input based on a first movement of a physical crown (108) of the wearable electronic device (100), wherein the first movement is a rotation of the physical crown (108) relative to the display (106) of the wearable electronic device in a first direction (502; 602; 702); and
   in response to the received first input:

in accordance with a determination that the first rotational movement of the physical crown (108) relative to the display (106) of the wearable electronic device (100) includes an angular velocity below a predetermined angular velocity threshold, maintaining the display of
the first plurality of icons (500) on the touch-sensitive display (106) of the wearable electronic device; and
in accordance with a determination that the first rotational movement of the physical crown (108) relative to the display (106) of the wearable electronic device (100) includes an angular velocity above the predetermined angular velocity threshold, replacing the first plurality of icons (500) with a second plurality of icons (600) on the touch-sensitive display (106), wherein the second plurality of icons (600) is a subset of the first plurality of icons (500);

receiving a second input based on a second movement of the physical crown (108) of the wearable electronic device (100), wherein the second movement is a further rotation of the physical crown (108) relative to the display (106) of the wearable electronic device in the first direction (502; 602; (702); and
in response to the second received input, launching an application associated with a first icon (604) of the second plurality of icons (600).

2. The method of claim 1, wherein the first icon (604) of the second plurality of icons (600) is displayed at a size greater than a second icon (504) from the first plurality of icons (500).

3. The method of any of claims 1-2, wherein the first icon (604) of the second plurality of icons (600) is displayed centered relative to the remaining icons of the second plurality of icons.

4. The method of any of claims 1-3, wherein launching the application includes removing all visible icons from the touch-sensitive display (106) while the application associated with the first icon (604) of the second plurality of icons (600) becomes displayed (704).

5. The method of any of claims 1-4, wherein the first plurality of icons (500) corresponds to a plurality of applications operable on the wearable electronic device (100).

6. The method of any of claims 1-5, wherein the first plurality of icons (500) corresponds to a plurality of applications installed on the wearable electronic device (100).

7. The method any of claims 1-6, wherein the first plurality of icons (500) corresponds to a user-selected set of applications on the wearable electronic device (100).

8. The method of any of claims 1-7, wherein the wearable electronic device (100) is a watch.

9. The method of any of claims 1-8, further comprising:

receiving information representing an activity in the application, wherein the application corresponds to a displayed icon (704); and
in response to the received information, altering an appearance of the displayed icon (704).

10. The method of claim 9, wherein the altering is one or more of blinking, changing color, and animating.

11. The method of any of claims 1-10, wherein the physical crown (108) is a mechanical crown.

12. The method of any of claims 1-11, further comprising:

detecting a force applied to the touch-sensitive display; and
replacing information displayed on the touch-sensitive display based on the detected force.

13. A computer-readable storage medium storing one or more programs configured to be executed by one or more processors (3606) of an electronic device (3600) with a touch-sensitive display (3610) and a rotatable input mechanism (3614), the one or more programs including instructions for performing any of the methods of claims 1-12.

14. An electronic device (3600) comprising:

one or more processors (3606);
a physical crown (3614) operatively coupled to the one or more processors (3606);
a touch-sensitive display (3610) operatively coupled to the one or more processors (3606);
a memory (3608); and
one or more programs, wherein the one or more programs are stored in the memory (3608) and configured to be executed by the one or more processors (3606), the one or more programs including instructions for performing any of the methods of claims 1-12.

**Patentansprüche**

1. Computerimplementiertes Verfahren umfassend:

   Anzeigen einer ersten Vielzahl von Icons (500) auf einer berührungsempfindlichen Anzeige (106) einer tragbaren elektronischen Vorrichtung (100);
   Empfangen einer ersten Eingabe basierend auf einer ersten Bewegung einer physischen Krone (108) der tragbaren elektronischen Vorrichtung (100), wobei die erste Bewegung eine Drehung der physischen Krone (108) relativ zur Anzeige (106) der tragbaren elektronischen Vorrichtung in einer ersten Richtung (502; 602; 702) ist; und
   als Reaktion auf die empfangene erste Eingabe:

   gemäß einer Bestimmung, dass die erste Drehbewegung der physischen Krone (108) relativ zur Anzeige (106) der tragbaren elektronischen Vorrichtung (100) eine Winkelgeschwindigkeit unter einer vorbestimmten Winkelgeschwindigkeitsschwelle umfasst, Aufrechterhalten des Anzeigens der ersten Vielzahl von Icons (500) auf der berührungsempfindlichen Anzeige (106) der tragbaren elektronischen Vorrichtung; und
   gemäß einer Bestimmung, dass die erste Drehbewegung der physischen Krone (108) relativ zur Anzeige (106) der tragbaren elektronischen Vorrichtung (100) eine Winkelgeschwindigkeit über der vorbestimmten Winkelgeschwindigkeitsschwelle umfasst, Ersetzen der ersten Vielzahl von Icons (500) durch eine zweite Vielzahl von Icons (600) auf der berührungsempfindlichen Anzeige (106), wobei die zweite Vielzahl von Icons (600) eine Untermenge der ersten Vielzahl von Icons (500) ist;

   Empfangen einer zweiten Eingabe basierend auf einer zweiten Bewegung der physischen Krone (108) der tragbaren elektronischen Vorrichtung (100), wobei die zweite Bewegung eine weitere Drehung der physischen Krone (108) relativ zur Anzeige (106) der tragbaren elektronischen Vorrichtung in der ersten Richtung (502; 602; 702) ist; und
   als Reaktion auf die zweite empfangene Eingabe, Starten einer einem ersten Icon (604) der zweiten Vielzahl von Icons (600) zugeordneten Applikation.

2. Verfahren nach Anspruch 1, wobei das erste Icon (604) der zweiten Vielzahl von Icons (600) in einer Größe angezeigt wird, die größer als ein zweites Icon (504) aus der ersten Vielzahl von Icons (500) ist.

3. Verfahren nach einem der Ansprüche 1-2, wobei das erste Icon (604) der zweiten Vielzahl von Icons (600) zentriert relativ zu den verbleibenden Icons der zweiten Vielzahl von Icons angezeigt wird.

4. Verfahren nach einem der Ansprüche 1-3, wobei das Starten der Applikation das Entfernen aller sichtbaren Icons von der berührungsempfindlichen Anzeige (106) umfasst, während die dem ersten Icon (604) der zweiten Vielzahl von Icons (600) zugeordnete Applikation zur Anzeige (704) kommt.

5. Verfahren nach einem der Ansprüche 1-4, wobei die erste Vielzahl von Icons (500) einer Vielzahl von in der tragbaren elektronischen Vorrichtung (100) funktionsbereiten Applikationen entspricht.

6. Verfahren nach einem der Ansprüche 1-5, wobei die erste Vielzahl von Icons (500) einer Vielzahl von in der tragbaren elektronischen Vorrichtung (100) installierten Applikationen entspricht.

7. Verfahren nach einem der Ansprüche 1-6, wobei die erste Vielzahl von Icons (500) einem Benutzer-ausgewählten Satz von Applikationen in der tragbaren elektronischen Vorrichtung (100) entspricht.

8. Verfahren nach einem der Ansprüche 1-7, wobei die tragbare elektronische Vorrichtung (100) eine Uhr ist.

9. Verfahren nach einem der Ansprüche 1-8, weiter umfassend:

   Empfangen von eine Aktivität in der Applikation darstellenden Informationen, wobei die Applikation einem angezeigten Icon (704) entspricht; und als Reaktion auf die empfangenen Informationen, Ändern eines Erscheinungsbilds des angezeigten Icons (704).

10. Verfahren nach Anspruch 9, wobei das Ändern eines oder mehrere von Blinken, Ändern der Farbe und Animieren ist.

11. Verfahren nach einem der Ansprüche 1-10, wobei die physische Krone (108) eine mechanische Krone ist.

12. Verfahren nach einem der Ansprüche 1-11 weiter umfassend:

    Erkennen einer auf die berührungsempfindliche Anzeige aufgebrachten Kraft; und Ersetzen von auf der berührungsempfindlichen Anzeige angezeigten Informationen basierend auf der erkannten Kraft.

13. Computerlesbares Speichermedium, das ein oder mehrere Programme speichert, die so konfiguriert sind, dass sie von einem oder mehreren Prozessoren (3606) einer elektronischen Vorrichtung (3600) mit einer berührungsempfindlichen Anzeige (3610) und einem drehbaren Eingabemechanismus (3614) ausgeführt werden, wobei das eine oder die mehreren Programme Anweisungen zur Durchführung eines der Verfahren nach den Ansprüchen 1-12 enthalten.

14. Elektronische Vorrichtung (3600) umfassend:

    einen oder mehrere Prozessoren (3606);
    eine mit dem einen oder den mehreren Prozessoren (3606) wirkverbundene, physische Krone (3614);
    eine mit dem einen oder den mehreren Prozessoren (3606) wirkverbundene, berührungsempfindliche Anzeige (3610);
    einen Speicher (3608); und
    ein oder mehrere Programme, wobei das eine oder die mehreren Programme in dem Speicher (3608) gespeichert und dafür konfiguriert sind, von dem einen oder den mehreren Prozessoren (3606) ausgeführt zu werden, wobei das eine oder die mehreren Programme Anweisungen zur Durchführung eines der Verfahren nach den Ansprüchen 1-12 enthalten.

## Revendications

1. Procédé mis en œuvre par ordinateur, comprenant :

   l'affichage d'une première pluralité d'icônes (500) sur un écran tactile (106) d'un dispositif électronique portable (100) ;
   la réception d'une première entrée basée sur un premier mouvement d'une couronne physique (108) du dispositif électronique portable (100), le premier mouvement étant une rotation de la couronne physique (108) par rapport à l'écran (106) du dispositif électronique portable dans une première direction (502; 602; 702) ; et
   en réponse à la première entrée reçue :

      en conformité avec une détermination disant que le premier mouvement de rotation de la couronne physique (108) par rapport à l'écran (106) du dispositif électronique portable (100) comprend une vitesse angulaire inférieure à un seuil de vitesse de rotation prédéterminé, le maintien de l'affichage de la première pluralité d'icônes (500) sur l'écran tactile (106) du dispositif électronique portable ; et
      en conformité avec une détermination disant que le premier mouvement de rotation de la couronne physique (108) par rapport à l'écran (106) du dispositif électronique portable (100) comprend une vitesse angulaire supérieure au seuil de vitesse de rotation prédéterminé, le remplacement de la première pluralité d'icônes (500) par une deuxième pluralité d'icônes (600) sur l'écran tactile (106), la deuxième pluralité d'icônes (600) étant un sous-ensemble de la première pluralité d'icônes (500) ;

   la réception d'une deuxième entrée basée sur un deuxième mouvement de la couronne physique (108) du dispositif électronique portable (100), le deuxième mouvement étant une rotation supplémentaire de la couronne physique (108) par rapport à l'écran (106) du dispositif électronique portable dans la première direction (502 ; 602 ; 702) ; et

en réponse à la deuxième entrée reçue, le lancement d'une application associée avec une première icône (604) de la deuxième pluralité d'icônes (600).

2. Procédé selon la revendication 1, dans lequel la première icône (604) de la deuxième pluralité d'icônes (600) est affichée avec une taille supérieure à une deuxième icône (504) de la première pluralité d'icônes (500).

3. Procédé selon l'une quelconque des revendications 1 à 2, dans lequel la première icône (604) de la deuxième pluralité d'icônes (600) est affichée centrée par rapport aux icônes restantes de la deuxième pluralité d'icônes.

4. Procédé selon l'une quelconque des revendications 1 à 3, dans lequel le lancement de l'application comprend la suppression de toutes les icônes visibles de l'écran tactile (106) tandis que l'application associée à la première icône (604) de la deuxième pluralité d'icônes (600) sera affichée (704).

5. Procédé selon l'une quelconque des revendications 1 à 4, dans lequel la première pluralité d'icônes (500) correspond à une pluralité d'applications pouvant fonctionner sur le dispositif électronique portable (100).

6. Procédé selon l'une quelconque des revendications 1 à 5, dans lequel la première pluralité d'icônes (500) correspond à une pluralité d'applications installées sur le dispositif électronique portable (100).

7. Procédé selon l'une quelconque des revendications 1 à 6, dans lequel la première pluralité d'icônes (500) correspond à un ensemble d'applications sélectionnées par l'utilisateur sur le dispositif électronique portable (100).

8. Procédé selon l'une quelconque des revendications 1 à 7, dans lequel le dispositif électronique portable (100) est une montre.

9. Procédé selon l'une quelconque des revendications 1 à 8, comprenant en outre :

la réception d'informations représentant une activité dans l'application, l'application correspondant à une icône affichée (704) ; et

en réponse aux informations reçues, la modification de l'apparence de l'icône affichée (704).

10. Procédé selon la revendication 9, dans lequel la modification est l'un ou plusieurs parmi clignotement, changement de couleur et animation.

11. Procédé selon l'une quelconque des revendications 1 à 10, dans lequel la couronne physique (108) est une couronne mécanique.

12. Procédé selon l'une quelconque des revendications 1 à 11, comprenant en outre :

la détection d'une force appliquée à l'écran tactile ; et

le remplacement des informations affichées sur l'écran tactile en fonction de la force détectée.

13. Support de stockage lisible par ordinateur, stockant un ou plusieurs programmes configurés pour être exécutés par un ou plusieurs processeurs (3606) d'un dispositif électronique (3600) avec un écran tactile (3610) et un mécanisme d'entrée rotatif (3614), le ou les programmes comprenant des instructions pour la mise en œuvre de l'un quelconque des procédés selon les revendications 1 à 12.

14. Dispositif électronique (3600), comprenant :

un ou plusieurs processeurs (3606) ;

une couronne physique (3614) couplée de manière opérationnelle à l'un ou plusieurs processeurs (3606) ; et

un écran tactile (3610) couplé de manière opérationnelle à l'un ou plusieurs processeurs (3606) ;

une mémoire (3608) ; et

un ou plusieurs programmes, dans lesquels l'un ou plusieurs programmes sont stockés dans la mémoire (3608) et configurés pour être exécutés par l'un ou plusieurs processeurs (3606), l'un ou plusieurs programmes comprenant des instructions pour la mise en œuvre de l'un quelconque des procédés selon les revendications 1 à 12.

100
Device

Strap 104

102
Body

106
Display

112
Button

108

114
Button

110
Button

Strap 104

**FIG. 1**

100
Device

12:53
Tuesday March 12

108

204

208

206

200
Screen

**FIG. 2**

100
Device

304  **12:53**  306

308

310  312

300
Screen

108

302
Direction

**FIG. 3**

100
Device

108

402
Direction

400
Screen

404
Grid

**FIG. 4**

100
Device

504

108

502
Direction

500
Screen

**FIG. 5**

100
Device

108

604

602
Direction

600
Screen

**FIG. 6**

EP 3 605 286 B1

100
Device

108

702
Direction

704
Icon

Tuesday, March 12

700
Screen

**FIG. 7**

100
Device

108

802
Direction

Alarm

6:30 a | on

2:15 p | off

7:45 p | off

804
App

**FIG. 8**

19

**FIG. 9**

**FIG. 10**

FIG. 11

FIG. 12

EP 3 605 286 B1

FIG. 13

FIG. 14

22

100
Device

108

A    B    C

1504

D    E    F

G    H    I

1502
Grid

**FIG. 15**

100
Device

108

A    B    ⌐C

1504

1602
Direction

1606
Movement

1604

D

**FIG. 16**

100
Device

108

| A | B |
| C | D |

1702
Grid

**FIG. 17**

100
Device

108

| A | B | C |
| D | E | F |
| G | H | I |

1802
Grid

**FIG. 18**

100
Device

108

1902
Direction

A B C

D E F

G H I

**FIG. 19**

100
Device

108

A B

D E

2002
Grid

**FIG. 20**

**FIG. 21**

**FIG. 22**

EP 3 605 286 B1

FIG. 23

FIG. 24

FIG. 25A

FIG. 25B

Grid 2610

Grid 2606

Direction 2604

2608 Swipe Direction

2600 Grid

2602 Wallpaper

A

B

FIG. 26

**FIG. 27**

EP 3 605 286 B1

FIG. 28

FIG. 29

**FIG. 30**

EP 3 605 286 B1

FIG. 33

FIG. 32

FIG. 31

100 Device

3400 outer circle

3402 inner circle

3404 Icon

3408 Icon

**FIG. 34**

```
                        ┌─────────────┐  ⌐ 3510
                        │ OBTAIN INPUT │                    ⌐ 3500
                        │  BASED ON    │
                        │   CROWN      │
                        └─────────────┘
                               │
                               ▼
                          ╱─────────╲  ⌐ 3520
                         ╱ MOVE TYPE? ╲
                         ╲           ╱
      CROWN               ╲─────────╱
     ROTATION       │          │          │
                    ▼       CROWN       CROWN
          ┌──────────────┐  PUSH/       TOUCH
          │ DETERMINE Z-AXIS│ PULL
          │ ADJACENT PLANE │
          └──────────────┘
                 │
                 ▼
      ┌──────────────┐   ┌──────────┐   ┌──────────────┐
      │DISPLAY SCREEN │   │DISPLAY HOME│  │DISPLAY CONTEXT│
      │CORRESPONDING  │   │  SCREEN   │   │    INFO      │
      │ TO ADJ. PLANE │   └──────────┘   └──────────────┘
      └──────────────┘
```

⌐ 3530

⌐ 3540      ⌐ 3550      ⌐ 3560

*FIG. 35*

FIG. 36

3900

FIG. 39

3800

FIG. 38

3700

FIG. 37

FIG. 40

4102 →

4104 →

4106 →

**FIG. 41**

EP 3 605 286 B1

FIG. 42

**EP 3 605 286 B1**

**REFERENCES CITED IN THE DESCRIPTION**

**Patent documents cited in the description**

- US 2013097566 A1
- US 6661438 B1
- WO 2006037545 A2
- EP 2551784 A1
- US 2012159380 A1
- US 2011316888 A1
- US 2009098912 A1
- US 2004252119 A1
- US 2003076301 A1